# EUROPÄISCHE PATENTSCHRIFT

(11) **EP 1 917 512 B1**
(45) Veröffentlichungstag und Bekanntmachung des Hinweises auf die Patenterteilung: **10.12.2014**
(21) Anmeldenummer: 06777859.7
(22) Anmeldetag: 20.07.2006
(51) Int. Cl.: G01M 11/02

(54) **VERFAHREN ZUR INTERFEROMETRISCHEN MESSUNG EINER OPTISCHEN EIGENSCHAFT EINES PRÜFLINGS SOWIE ZUR DURCHFÜHRUNG DES VERFAHRENS GEEIGNETE VORRICHTUNG**
METHOD FOR INTERFEROMETRICALLY MEASURING AN OPTICAL PROPERTY OF A TEST PIECE AND A DEVICE SUITED FOR CARRYING OUT THIS METHOD
PROCEDE POUR MESURER UNE PROPRIETE OPTIQUE D'UNE PIECE A EXAMINER, PAR INTERFEROMETRIE, ET DISPOSITIF SERVANT A LA MISE EN OEUVRE DE CE PROCEDE

(30) Priorität: 26.08.2005 DE 102005040749
(43) Veröffentlichungstag der Anmeldung: 07.05.2008
(73) Patentinhaber: Heraeus Quarzglas GmbH & Co. KG, 63450 Hanau (DE)
(72) Erfinder: SCHOENFELD, Doerte, 63450 Hanau (DE); REUTER, Thomas, 63533 Mainhausen (DE)
(74) Vertreter: Staudt, Armin Walter
(86) Internationale Anmeldenummer: PCT/EP2006/064452
(87) Internationale Veröffentlichungsnummer: WO 2007/023042

(56) Entgegenhaltungen:
- EP-A- 1 324 006
- US-A- 5 838 442
- US-A1- 2003 110 809
- MICHAEL BRAY: "Stitching interferometer for large optics: recent developments of a system" PROCEEDINGS OF SPIE, THIRD INTERNATIONAL CONFERENCE ON SOLID STATE LASERS FOR APPLICATION TO INERTIAL CONFINEMENT FUSION, Bd. 3492, 30. Juli 1999 (1999-07-30), Seiten 946-956, XP002400996
- ASSOUFID ET AL: "3-D Profile Measurements of Large X-Ray Synchrotron Radiation Mirrors using Stitching Interferometry" PROCEEDINGS OF SPIE ; X-RAY MIRRORS, CRYSTALS, AND MULTILAYERS II,, Bd. 4782, Nr. 03, 30. Dezember 2002 (2002-12-30), Seiten 21-28, XP002400997 Argonne

## Beschreibung

Die Erfindung betrifft ein Verfahren zur interferometrischen Messung einer optischen Eigenschaft eines zu messenden Messbereichs eines Prüflings aus transparentem Werkstoff mit zwei sich gegenüberliegenden Hautflächen, umfassend folgende Verfahrensschritte:
(a) Anordnen des Prüflings in einem Messstrahlengang eines Interferometers derart, dass ein Messstrahl des Interferometers die Hauptflächen des Prüflings in einer ersten Teilfläche des Messbereichs durchsetzt, und Durchführen einer ersten interferometrischen Messung unter Gewinnung einer ersten Gruppe von Messdaten,
(b) Anordnen des Prüflings im Messstrahlengang derart, dass der Messstrahl die Hauptflächen des Prüflings in einer zweiten Teilfläche des Messbereichs durchsetzt, welche versetzt zur ersten Teilfläche, angeordnet ist und mit dieser in einem Überlappungsbereich überlappt, und Durchführen mindestens einer zweiten interferometrischen Messung unter Gewinnung einer zweiten Gruppe von Messdaten,
(c) Abgleich der Messdaten von erster und zweiter Gruppe unter Verwendung von im Überlappungsbereich erhaltener redundanter Informationen für die Erstellung eines Gesamt-Interferogramms über den Messbereich.

Darüber hinaus geht es bei der Erfindung um eine Vorrichtung zur Messung einer optischen Eigenschaft im Messbereich eines zwei sich gegenüberliegende Hauptflächen aufweisenden Prüflings aus transparentem Werkstoff,
(a) mit einer Halteeinrichtung für den Prüfling,
(b) einem Interferometer, das geeignet ist, einen Messstrahl auf Teilflächen eines zu messenden Messbereichs des Prüflings zu richten und Sub-Interferogramme der Teilflächen zu messen,
(c) einem Transfersystems, mittels dem der Prüfling in Richtungen senkrecht zum Messstrahl verfahrbar ist, so dass Messungen an einer Vielzahl von Teilflächen durchgeführt werden können, welche den Messbereich vollständig abdecken, wobei jede der Teilflächen von einer benachbarten Teilfläche mindestens teilweise in einem Überlappungsbereich überlappt wird; und
(d) mit einer Steuerungseinheit, die das Interferometer und das Transfersystem steuert und auf Basis der Sub-Interferogramme die Form der vom Prüfling transmittierten Wellenfront ermittelt, wobei die an den Überlappungsbereichen ermittelten Messdaten dazu verwendet werden, die Sub-Interferogramme untereinander anzupassen.

Die Messung der Homogenität der Brechzahl optischer Elemente, wie etwa optischer Linsen, erfolgt häufig interferometrisch. Dabei werden Interferenzmuster, die zwischen einem den Prüfling passierenden Messstrahl und einem Referenzstrahl entstehen, mit einem Interferometer gemessen und ausgewertet. Typische Abmessungen großer Linsen liegen bei 450 mm x 450 mm, bei Sonderanfertigungen auch deutlich darüber. Die Anforderungen an die Homogenität derartiger großflächiger optischer Elemente und damit einhergehend auch an die Messtechnik nehmen seit Jahren zu, insbesondere was die Messgenauigkeit und Größe des Messbereichs anbelangt.

In der Regel ist bei einer interferometrischen Messung der Durchmesser des Messstrahls des Interferometers mindestens so groß, wie der Messbereich, der dem spezifizierten Volumenbereich des Prüflings zugeordnet ist (dieser Volumenbereich wird hier auch als "CA-Bereich" (clear aperture) bezeichnet). Häufig werden für derartige Messungen Interferometer mit einem Messstrahl-Durchmesser von 30,48 cm (12 Zoll) eingesetzt. Größere Messstrahlen erfordern eine aufwändige optische Aufweitung, die sehr teuer ist.

Alternativ dazu werden große Messbereiche auch unter Einsatz von Standard-Interferometern in einer als "Stitching" bezeichneten Technik ausgemessen. Als "Stitching" wird eine Funktion zur Verbindung von Flächen über gemeinsame Punkte, Flächen oder Kanten bezeichnet. Bei der Stitching-Technik werden Sub-Interferogramme, d.h. eine Vielzahl von Teilflächen des Messbereichs ermittelt, die insgesamt den Messbereich vollständig abdecken. Dabei überlappen sich die Sub-Interferogramme benachbarter Teilflächen in einem Überlappungsbereich. Die Messergebnisse im Überlappungsbereich werden dazu verwendet, um die Messergebnisse der verschiedenen Teilflächen softwaregesteuert untereinander so anzupassen, dass die einzelnen Sub-Interferogramme möglichst fehlerfrei zu einem den gesamten Messbereich des Prüflings zeigenden Gesamt-Interferogramm zusammengesetzt werden können.

Diese Technik, die beispielsweise beschrieben wurde von "Otsubo, Okada, Tsujiuchi, Measurement of large plane surface shapes by connecting small - aperture interferograms, Opt. Eng. 33 (2), pp. 608-613, 1994 und von "M.Bray, Stitching interferometry: how and why it works, Proc. SPIE 3739, pp. 259-273, 1999", "M. Bray, Stitching interferometer for Large Optics: Recent developments of a system; Proc. SPIE 3492, PP 946-956, 1999" erfordert jedoch auch bei Anwendung auf die Messung der Brechzahlhomogenität eine präzise Oberflächenpolitur des Prüflings und ist daher sehr zeit- und kostenaufwändig.

Eine Vorrichtung zur Durchführung der Stitching-Technik erfordert eine Transfereinheit mit Steuerung zur präzisen Positionierung von Prüfling und Messstrahl zueinander sowie einen Rechner zur softwareunterstützten Positionierung und Anpassung der Sub-Interferogramme. Eine derartige Vorrichtung ist beispielsweise aus der DE 697 06 247 T2 bekannt.

Weiterhin wird in der DE 44 01 145 C1 ein inteferometrisches Messverfahren für die Ermittlung des radialen Brechungsindexprofils von optischen Vorformen beschrieben. An einem Dünnschnitt von den Endflächen der Vorform wird eine Schnittkante in radialer Richtung erzeugt, der Dünnschnitt in eine Immersionsflüssigkeit eingelegt, und Doppelbilder der Schnittkante mittels eines Shearing-Interferenzmikroskosps erzeugt. Aus der Bildüberlagerung lässt sich der radiale Brechungsindexprofil ermitteln.

In der DD 215 168 B geht es um die Ermittlung der Längshomogenität von optischen Vorformen mittels eines interferometrischen Prüfverfahrens, indem ein Laserstrahl in zwei kohärente Strahlenbündel zerlegt wird, wovon der eine die zu prüfende Vorform und der andere eine Referenzprobe durchläuft. Beide Laserstrahlen werden so überlagert und auf einem Bildschirm abgebildet, dass Störungen im Brechungsindexprofil als Verformungen äquidistanter Linien erscheinen.

Aus der DE 102 61 775 A1 ist eine Vorrichtung zur optischen Vermessung eines Abbildungssystems mit sehr großer Apertur mittels Shearinginterferometrie-Wellenfronterfassung bekannt.. Hierzu ist vorgesehen, dass die Zwischenräume zwischen benachbarten Optikkomponenten des Abbildungssystems jeweils mit einer Immersionsflüssigkeit gefüllt werden können. Dadurch wird eine Verringerung des Prüfstrahlquerschnitts ohne Informationsverlust ermöglicht, so dass auch bei Abbildungssystemen mit sehr großer Apertur von mehr als 1,0 Bildfehler mittels Shearinginterferometrie genau vermessen werden können.

Der Erfindung liegt die Aufgabe zugrunde, eine Verbesserung der bekannten "Stitching-Technik" hinsichtlich Effizienz und Kostenersparnis unter Beibehaltung einer hohen Messgenauigkeit und Reproduzierbarkeit zu erzielen.

Außerdem liegt der Erfindung die Aufgabe zugrunde, eine kostengünstige, betriebssichere und verhältnismäßig einfach zu handhabende Vorrichtung zur Durchführung des Verfahrens bereitzustellen.

Hinsichtlich des Verfahrens wird diese Aufgabe ausgehend von dem eingangs genannten Verfahren erfindungsgemäß dadurch gelöst, dass der Messbereich vollständig mit einem Film aus einer Immersionsflüssigkeit belegt ist, der zwischen den Hauptflächen des Prüflings und Anlegekörpern aus transparentem Werkstoff ausgebildet wird.

Das Messverfahren gemäß der Erfindung sieht somit den Einsatz einer Immersionsflüssigkeit zwischen den Hauptflächen des Prüflings und Anlegekörpern vor. Diese Maßnahme ist an und für sich bekannt und beispielsweise beschrieben in P. Hartmann, R. Mackh, H. Kohlmann, "Advances in the homogeneity measurement of optical glasses at the Schott 20 inch Fizeau interferometer", Proc. SPIE 2775, pp. 108-114, 1996

Dabei wird auf den Hauptflächen des Prüflings eine Immersionsflüssigkeit mittels Anlegeplatten, die sich durch hohe Homogenität und präzise Oberflächenpolitur auszeichnen, fixiert. Die in dieser "Sandwich-Anordnung" (Anlegeplatte - Immersionsflüssigkeit - Prüfling - Immersionsflüssigkeit - Anlegeplatte) bedingten zusätzlichen Verzerrungen des Messstrahls durch die Anlegeplatten werden durch eine Referenzmessung ohne Prüfling im Strahlengang kompensiert und berücksichtigt.

Die Verwendung der Immersionsflüssigkeit erlaubt es, einen nicht präzise polierten Prüfling einzusetzen, so dass der Aufwand für die Oberflächenpolitur entfällt. Es genügt, wenn die mechanische Endbearbeitung der Hauptflächen zum Beispiel durch Schleifen, Fräsen, Läppen oder Schneiden erfolgt.

Bei dieser "Immersions-Methode" sind jedoch Abbildungsfehler im Randbereich des Films der Immersionsflüssigkeit inhärent. In der Regel sind die Anlegeplatten an die Größe des Messstrahls des Interferometers angepasst und Prüflinge typischerweise kleiner, so dass diese Fehler üblicherweise am Rande des Messfelds außerhalb des CA-Bereichs auftreten und nicht stören. Bei Vermessung von Prüflingen mit größeren Abmessungen als der des Messstrahls des Interferometers treten die Randfehler am Rande der Sub-Interferogramme, d.h. im Überlappbereich, auf und verhindern oder erschweren die oben beschriebene "Stitching-Technik", also das softwaregesteuerte Zusammenfügen mehrerer Sub-Interferogramme zu einem Gesamt-Interferogramm auf Basis der Messergebnisse in den Überlappungsbereichen. Die Modifikation der bekannten Methode gemäß vorliegender Erfindung besteht nunmehr darin, dass der Film aus Immersionsflüssigkeit mittels ausreichend großer Anlegekörper über eine Fläche verteilt wird, die den gesamten Messbereich des Prüflings umfasst. Somit ist der gesamte, dem CA-Bereich zuzuordnende Flächenanteil der Hauptflächen vollständig mit einem Film aus einer Immersionsflüssigkeit benetzt und von Anlegekörpern bedeckt. Dadurch werden die der Immersions-Methode inhärenten Randfehler vermieden oder in den Außenbereich des Prüflings verlegt, der nicht zum CA-Bereich gehört und der in der Regel nicht spezifiziert ist.

Erfindungsgemäß werden somit einzelne Sub-Interferogramme an Teilflächen des insgesamt von Immersionsflüssigkeit bedeckten Gesamt-Messbereichs ermittelt, so dass die Überlappungsbereiche benachbarter Sub-Interferogramm ohne die ansonsten auftretenden Rand-Artefakte zur Erstellung eines Gesamt-Interferogramms ausgewertet werden können. Die Anzahl und Position der. Sub-Interferogramme ist dabei so zu wählen, dass der gesamte CA-Bereich erfasst wird, wie dies auch sonst bei der Stitching-Technik üblich ist. Somit ermöglicht das erfindungsgemäße Verfahren den Einsatz der - wegen des Wegfalls der Oberfächenpolitur - kostengünstigen Immersions-Methode erstmals bei der für die Vermessung großflächiger Prüflinge ebenfalls - wegen des Wegfalls der ansonsten notwendigen Messstrahl-Aufweitung - preiswerten Stitching-Technik.

Gemäß einer vorteilhaften Weiterbildung des erfindungsgemäßen Verfahrens ist der Prüfling mit zwei im wesentlichen planen Hauptflächen versehen.

Plane Hauptflächen vereinfachen die Ausbildung eines gleichmäßigen Films der Immersionsflüssigkeit ohne aufwändige Anpassung der Oberflächen von Prüfling und Anlegekörpern

Vorzugsweise sind die Anlegekörper in Form von Anlegeplatten ausgebildet.

Anlegekörper in Plattenform sind relativ kostengünstig herstellbar und sie lassen sich verhältnismäßig einfach handhaben. Zur Vermeidung von Mehrfachinterferenzen ist es vorteilhaft, wenn die Anlegeplatten eine geringe Keilform aufweisen.

Besonders bewährt haben sich Anlegeplätten, die Rechteckform aufweisen. Rechteckige Anlegeplatten decken bei vorgegebener Bauhöhe der Interferometer-Kammer einen größeren Flächenbereich ab als runde Anlegeplatten.

Es hat sich weiterhin als vorteilhaft als erwiesen, wenn die Anlegekörper den Messbereich allseitig um mindestens 20 mm überragen.

Dadurch ist es möglich, den gesamten Messbereich ohne Inkaufnahme von Rand-Artefakten auszumessen.

Es hat sich weiterhin bewährt, wenn die Anlegekörper den Prüfling allseitig um mindestens 20 mm überragen.

Dadurch wird das Anlegen der Anlegekörper und das Aufbringen der Immersionsflüssigkeit erleichtert.

Es hat sich bewährt, für die Halterung von Prüfling und Anlegekörper eine Halteeinrichtung vorzusehen, die mittels eines einen elektrischen Antrieb aufweisenden Transfersystems in Richtungen senkrecht zum Messstrahl verfahrbar ist.

Die oben erwähnte "Sandwich-Anordnung", bestehend aus den Anlegekörpern und dem Prüfling, wird mittels einer Halteeinrichtung fixiert und für die Messungen der Teilflächen gemeinsam von einer Position zur anderen verfahren. Das automatische Transfersystem erlaubt ein genaues Anfahren der Messposition und erleichtert die Handhabung. Um Vibrationen zu vermeiden, ist es vorteilhaft, einen erschütterungsfreien elektrischen Antrieb und schwingungsabsorbierende Elemente einzusetzen sowie die Halteeinrichtung mit sehr geringer Geschwindigkeit zu verfahren.

Zur Bestückung und zur Präparation des Immersionsfilms ist es günstig, wenn die Halteeinrichtung innerhalb einer Interferometer-Kammer angeordnet und mittels des Transfersystems außerhalb dieser verfahrbar ist.

Dadurch kann die Halteeinrichtung außerhalb der Interferometer-Kammer bewegt werden, was das Handling der großen Platten und Proben und die Be- und Entstückung der Halteeinrichtung erleichtert.

Vorteilhafterweise ist die Positioniergenauigkeit des Transfersystems um mindestens den Faktor 5 besser als die räumliche Auflösung des Interferometers.

Dadurch kann die örtliche Position des Messstrahls als genau bekannt angesehen werden, was das Zusammenfügen der Sub-Interferogramme mittels Stitching-Technik vereinfacht.

Die zu messende optische Eigenschaft des Prüfling-Werkstoffs umfasst vorzugsweise die Homogenität der Brechzahl und/oder die Spannungsdoppelbrechung im Messbereich.

Vorzugsweise handelt es sich bei dem transparentem Werkstoff des Prüflings und der Anlegekörper um dotiertes oder undotiertes Quarzglas.

Hinsichtlich der Vorrichtung wird diese Aufgabe ausgehend von dem eingangs genannten Verfahren erfindungsgemäß dadurch gelöst, dass an den Hauptflächen des Prüflings Anlegekörper aus transparentem Werkstoff anliegen, welche den Messbereich vollständig bedecken, wobei zwischen den Anlegekörpern und den Hauptflächen des Prüflings ein Film aus einer Immersionsflüssigkeit ausgebildet ist.

Die erfindungsgemäße Vorrichtung dient in erster Linie zur Durchführung des oben näher erläuterten Verfahrens. Dieses beruht auf einer Kombination der "Stitching-Technik" mit einer "Immersions-Methode". Hierzu wird eine Vorrichtung vorgeschlagen, welche die aus der "Stitching-Technik" bekannten Elemente, wie Halterung für den Prüfling, Interferometer, Transfersystem und Steuerungseinheit insoweit modifiziert, als Anlegekörper aus transparentem Werkstoff vorgesehen sind, die den Messbereich vollständig bedecken und die dazu dienen, einen Film aus einer Immersionsflüssigkeit über dem gesamten Messbereich auszubilden.

Diese Modifikation der bekannten Vorrichtung erlaubt den Einsatz der "Immersions-Methode" und damit einhergehend den Einsatz eines nicht präzise polierten Prüflings, so dass der Aufwand für die Oberflächenpolitur entfällt. Die mechanische Endbearbeitung der Hauptflächen des Prüflings zum Beispiel durch Schleifen, Fräsen, Läppen oder Schneiden genügt. Die der "Immersions-Methode" inhärenten Abbildungsfehler im Randbereich des Films der Immersionsflüssigkeit bei Verwendung der üblichen Anlegekörper mit Größen im Bereich des Messstrahls werden vermieden. Diese Abbildungsfehler verhindern oder erschweren die Ausführung der "Stitching-Technik", also das softwaregesteuerte Zusammenfügen mehrerer Sub-Interferogramme zu einem Gesamt-Interferogramm auf Basis der Messergebnisse in den Überlappungsbereichen Dies gelingt dadurch, dass der Film aus Immersionsflüssigkeit mittels der Anlegekörper über eine Fläche verteilt wird, die den gesamten Messbereich des Prüflings umfasst. Somit ist der gesamte, dem CA-Bereich zuzuordnende Flächenanteil der Hauptflächen vollständig mit einem Film aus einer Immersionsflüssigkeit benetzt und von Anlegekörpern bedeckt. Dadurch werden die der Immersions-Methode inhärenten Randfehler vermieden oder in den Außenbereich des Prüflings verlegt, der nicht zum CA-Bereich gehört und der in der Regel nicht spezifiziert ist.

Vorteilhafte Ausgestaltungen der erfindungsgemäßen Vorrichtung ergeben sich aus den Unteransprüchen. Soweit in den Unteransprüchen angegebene Ausgestaltungen der Vorrichtung den in Unteransprüchen zum erfindungsgemäßen Verfahren genannten Verfahrensweisen nachgebildet sind, wird zur ergänzenden Erläuterung auf die obigen Ausführungen zu den entsprechenden Verfahrensansprüchen verwiesen.

Nachfolgend wird die Erfindung anhand eines Ausführungsbeispiels und einer Zeichnung näher erläutert. In der Zeichnung zeigen im Einzelnen
- **Figur 1a:**: einen Aufbau zur Durchführung des erfindungsgemäßen Messverfahrens in schematischer Darstellung bei der Messung einer Messprobe,
- **Figur 1b:**: den Aufbau gemäß Figur 1a ohne Messprobe zur Aufnahme einer Referenzmessung,
- **Figur 2a:**: ein an Anlegeplatten anhand der Stitching-Technik gemessenes Interferogramm,
- **Figur 2b:**: den Brechzahlverlauf über dem Interferogramm nach Figur 2a,
- **Figur 3:**: ein Balkendiagramm zum Vergleich der Messergebnisse verschiedener optischer Eigenschaften, die anhand der Stitching-Technik und anhand einer einfachen Interferometermessung erhalten wurden, und
- **Figur 4:**: ein Diagramm zum Einfluss des Ausmaßes des Überlapps von Sub-Interferogrammen bei der Stitching-Technik auf verschiedene Messwerte.

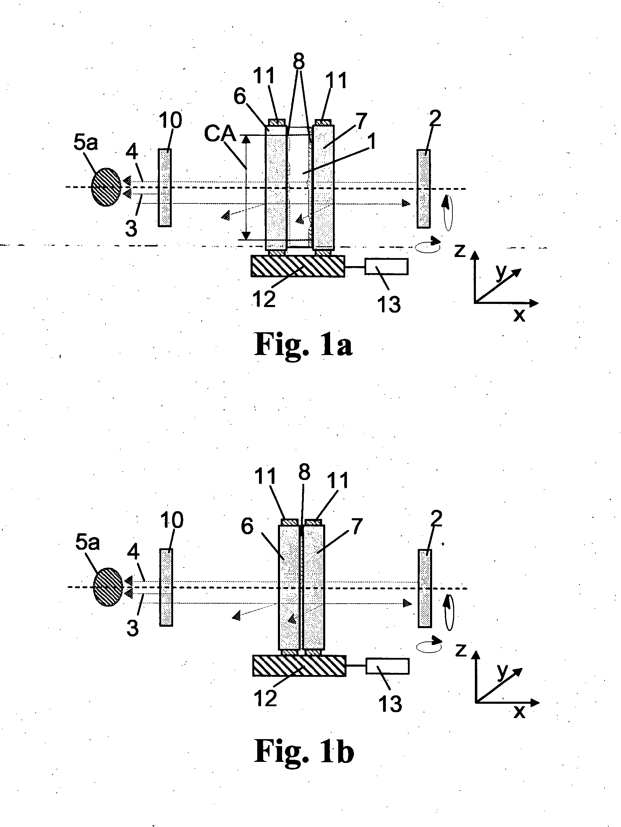

Die **Figuren 1a und 1b** zeigen schematisch einen Aufbau zur Messung der Brechzahl-Homogenität im Bereich eines zu spezifizierenden Messbereichs "CA" einer Messprobe 1 mittels des erfindungsgemäßen Verfahrens. Es wird ein Fizeau-Interferometer (Zygo GPI-Serie) mit einer Apertur von 30,48 cm (12 Zoll) und einem HeNe-Laser mit einer Arbeitswellenlänge von 632,8 nm eingesetzt. Das Interferometer ist mit einer Kamera mit einer Auflösung von 640 x 480 Bildpunkten ausgestattet und auf einer optischen Bank montiert, die mittels eines aktiven und eines passiven Schwingungsisolationssystems weitgehend von den Umgebungsschwingungen entkoppelt ist. Der gesamte Messaufbau ist mittels einer Klimaanlage mit zwei Regelkreisen auf +/- 0,1 °K thermalisiert.

Die Interferometeroptik formt aus dem HeNe-Laserstrahl ein paralleles Strahlenbündel mit im wesentlichen ebenen Wellenfronten. Durch Reflexion am ersten Interferometerspiegel 10, wird aus dem Strahlenbündel ein Referenzstrahl 3 abgezweigt und zurückreflektiert. Der eigentliche Messstrahl 4 durchsetzt die Messprobe 1 (Figur 1a) in einem Teilbereich des Messbereich "CA" und wird danach an vom zweiten Interferometerspiegel 2 zurückreflektiert. Messstrahl 4 und Referenzstrahl 3 werden im Interferometer überlagert und ergeben so eine erste interferometrische Messung, deren Messdaten gespeichert und mittels der Kamera als erstes Interferogramm 5a abgebildet werden.

Bei der Messprobe 1 handelt es sich um ein rechteckiges Halbzeug aus synthetischem Quarzglas für eine Großlinse für die Fokussierung von Laserstrahlung. Die Messprobe 1 weist zwei plan geschliffene Flachseiten auf, und ist zwischen zwei an ihren Flachseiten anliegenden Anlegeplatten 6, 7 mit rechteckigem Querschnitt eingeklemmt.

Die Planflächen der Anlegeplatten 6, 7 sind präzise poliert (≤ λ/10). Zwischen den Kontaktflächen ist beiderseits ein Film 8 einer Immersionsflüssigkeit vorgesehen, der sich über die gesamte Fläche der Messproben-Flachseiten erstreckt. Hierzu sind die Anlegeplatten 6, 7 so groß ausgeführt, dass sie die runde Messprobe 1 allseitig um mindestens 20 mm überragen.

Die Anlegeplatten 6, 7 haben einen rechteckigen Querschnitt. Ihre Abmessungen betragen ca. 650 mm x 650 mm x 100 mm. Sie bestehen aus homogenen Quarzglas aus natürlichen Rohstoffen, das unter der Bezeichnung Herasil 102 von der Firma Heraeus Quarzglas GmbH & Co. KG, Hanau, im Handel erhältlich ist.

Bei der Immersionsflüssigkeit 8 handelt es sich um ein handelsübliches Öl, das bei 22,0 °C und bei der Arbeitswellenlänge von λ=632,8nm einen Brechungsindex von 1,45704 hat.

Um die Einflüsse von Anlegeplatten und Immersionsflüssigkeit auf das Messergebnis zu eliminieren, wird eine weitere Messung ohne die Messprobe 1 durchgeführt, wie dies Figur 1b schematisch zeigt. Dabei wird ein zweites Interferogramm 5b erhalten. Die erhaltenen Messwerte werden von den Messwerten des ersten Interferogramms 5a so subtrahiert, dass als Endergebnis die durch die Messprobe 1 bewirkte Veränderung der Wellenfront des Messstrahls 4 erhalten wird.

Die Anlegeplatten 6, 7 und die Messprobe 1 werden auf einer Halteeinrichtung gehalten und zueinander fixiert. Zur Aufnahme jeweils einer Anlegeplatte 6, 7 umfasst die Halteeinrichtung zwei Spannrahmen 11, die am Umfang einer Anlegeplatte 6, 7 angreifen und die auf einem verfahrbaren Träger 12 fixiert sind. Zum Bestücken und für die Präparation mit dem Immersionsöl kann der Träger 12 außerhalb der Interferometerkammer gebracht werden, was die Handhabung deutlich erleichtert.

Die Bewegung des Trägers 12 erfolgt mittels eines Transfersystems, das in der Figur 1a schematisch durch einen Linearmotor 13 dargestellt ist. Das Transfersystem 13 ist auf der optischen Bank montiert und hat keinen Kontakt zum Boden. Dadurch wird die Wirkung der Schwingungsdämpfung auch für das Transfersystem 13 und die Halteeinrichtung genutzt. Um eine Schwingungserzeugung vom Transfersystems 13 zu vermeiden, werden für die Bewegungserzeugung vibrationsarme elektrische Antriebe, Präzisionslager und Schwingungsdämpfungselemente eingesetzt. Außerdem ist die Bewegungsgeschwindigkeit des Transfersystems gering, um Schwingungen zu minimieren.

Mittels des Transfersystems 13 ist die Halteeinrichtung in einer Ebene senkrecht zur Ausbreitungsrichtung des Messstrahls 4 verfahrbar.

Weiterhin ist eine (in der Figur nicht dargestellte) Steuereinheit für die Vorgabe und die Erfassung und Auswertung von Daten und für die Steuerung des Transfersystems 13 vorgesehen.

Die erfindungsgemäße Vorrichtung ist grundsätzlich für Proben mit beliebig großen Messbereichen einsetzbar. Im Ausführungsbeispiel ist der Messbereich aufgrund der Abmessungen der vorhandenen Interferometerkammer auf 610 mm x 610 mm beschränkt.

Nachfolgend wird ein Ausführungsbeispiel für das erfindungsgemäße Verfahren anhand Figur 1 näher erläutert:
Es stellt sich die Aufgabe, die Brechzahl-Verteilung innerhalb des CA-Bereichs mit den oben genannten Abmessungen von 420 mm x.405 mm zu ermitteln. Hierzu werden die plan geschliffene, mit Immersionsöl versehene und mitsamt den polierten Anlegeplatten 6, 7 im Rahmen 11 fixierte Messprobe 1 mittels des Transfersystems 13 nacheinander auf vorberechnete Positionen relativ zum Strahlenweg des Interferometers bewegt, um Ausschnittsmessungen aus dem Gesamt-CA-Bereich vorzunehmen, wie dies bei der Stitching-Technik üblich ist. Die Positionen sind so ausgewählt, dass die Sub-Interferogramme den gesamten CA-Bereich abdecken, wobei sich Überlappungen zwischen benachbarten Messbereichen ergeben.

Zum Zusammenfügen der einzelnen Sub-Interferogramme wird eine speziell entwickelte Software eingesetzt, die auf der Methode der kleinsten quadratischen Abweichung basiert.

Anzahl und Umfang verbleibender Stitching-Fehler hängen im Wesentlichen von der Messgenauigkeit des Interferometers, jedoch auch vom gewählten Überlapp und der Auswertung der Messwerte aus den Überlappungsbereichen ab.

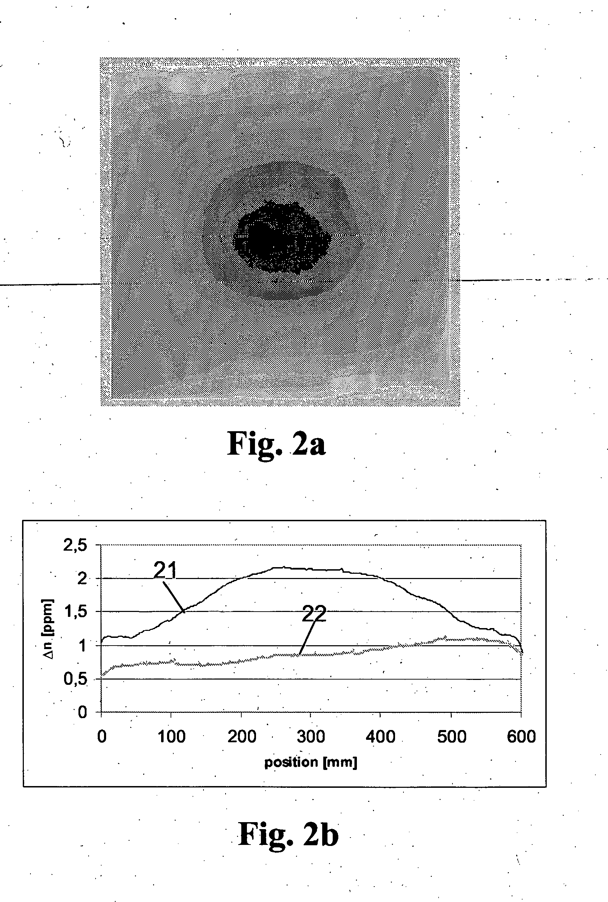

**Figur 2a** zeigt ein Interferogramm quadratischer Anlegeplatten 6, 7, das anhand der Stitching-Technik wie in Figur 1b schematisch gezeigt, gemessen wurde. Der Messbereich beträgt 610 mm x 610 mm. Das Gesamt-Interferogramm ist aus fünfzehn Sub-Interferogrammen mit jeweils einer Messfläche von 30,48 cm (12 Zoll) zusammengefügt. Die vorhandenen Stitching-Fehler sind gering.

**Figur 2b** zeigt das Ergebnis der Interferogramms nach Figur 2a hinsichtlich der Brechzahlverlaufes über den Querschnitt der Anlegeplatten 6, 7 anhand eines Diagramms. Auf der y-Achse ist hierbei die Brechzahlunterschied Δn in ppm aufgetragen, und auf der x-Achse die Position in mm. Die Linie 21 zeigt den Brechzahlverlauf im Bereich einer der Mittellinien 23 (Figur 2a) und die Linie 22 den Brechzahlverlauf im Randbereich 24 (Figur 2a) der Anlegeplatte. Als maximale Brechzahlinhomogenität werden hier 2,2 ppm gemessen. Kleine Sprünge in den beiden Kurven beruhen auf Stitching-Fehlern; diese sind jedoch in jedem Fall kleiner als 0,02 ppm.

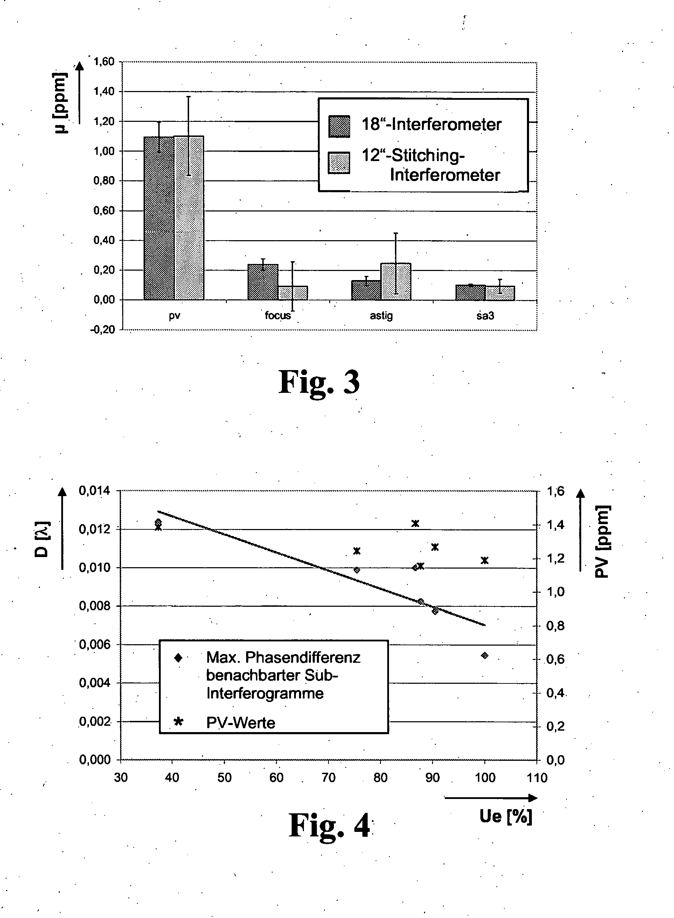

Einen Eindruck über die Genauigkeit und Reproduzierbarkeit der Stitching-Technik gibt auch das Balkendiagramm von **Figur 3****.** Es zeigt Ergebnisse von interferometrischen Messungen an einer Messprobe aus Quarzglas mit einem Messbereich mit einem Durchmesser von 300 mm hinsichtlich PV-Wert (pv), Fokus (focus), Astigmatismus (astig) und sphärischer Aberration (sa3). Auf der y-Achse ist der Mittelwert "µ" für die jeweilige Eigenschaft aufgetragen.

Der linke Balken repräsentiert jeweils die mit einem 45,72 cm (18 Zoll) Interferometer nach dem Standardverfahren ermittelten Ergebnisse, und der rechte Balken die mit einem 30,48 cm (12 Zoll) Interferometer mittels des erfindungsgemäßen Verfahrens und der Stitching-Technik ermittelten Ergebnisse. Es ist jeweils ein Fehlerbalken eingezeichnet, der den 95%- Vertrauensbereich angibt, und der bei den Standardmessungen auf 20 Datensätzen und bei dem erfindungsgemäßen Verfahren auf 7 Datensätzen beruht. Das Diagramm zeigt, dass mittels Standardverfahren und erfindungsgemäßem Verfahrens ermittelte Ergebnisse im Rahmen des Vertrauensbereiches übereinstimmen.

Bei der Stitching-Technik hängt die Messgenauigkeit bekanntermaßen vom gewählten Überlapp der Interferogramme ab. Diese Abhängigkeit besteht daher auch beim erfindungsgemäßen Verfahren, wie auch dem Diagramm von **Figur 4** ersichtlich. Auf der x-Achse ist hier der Überlapp "Ue" als %-Anteil der redundanten Punkte des Gesamt-Interferogramms aufgetragen. Auf der linken-Seite der y-Achse ist ein Maß "D" für die maximale Phasendifferenz am Rand der überlappenden Sub-Interferogramme in Einheiten der Arbeitswellenlänge [λ] aufgetragen, und auf der rechten Seite der y-Achse Maximalunterschiede (PV-Werte) des Interferogramms über einen CA-Bereich von 500 mm. Wie erwartet, nehmen die Stitching-Fehler mit zunehmendem Überlapp ab. Für praktische Anwendungen ist ein Überlapp von ungefähr 90 % (bzgl. der Anzahl redundanter Pixel) ausreichend. Demgegenüber zeigen die PV-Werte der zusammengefügten Wellenfront-Interferogramme keine Abhängigkeit vom Überlapp.

## Patentansprüche

1. Verfahren zur interferometrischen Messung einer optischen Eigenschaft eines zu messenden Messbereichs eines Prüflings (1) aus transparentem Werkstoff mit zwei sich gegenüberliegenden Hauptflächen, umfassend folgende Verfahrensschritte:
(a) Anordnen des Prüflings (1) in einem Messstrahlengang eines Interferometers derart, dass ein Messstrahl (4) des Interferometers die Hauptflächen des Prüflings (1) in einer ersten Teilfläche des Messbereichs (CA) durchsetzt, und Durchführen einer ersten interferometrischen Messung unter Gewinnung einer ersten Gruppe von Messdaten,
(b) Anordnen des Prüflings (1) im Messstrahlengang derart, dass der Messstrahl die Hauptflächen des Prüflings (1) in einer zweiten Teilfläche des Messbereichs (CA) durchsetzt, welche versetzt zur ersten Teilfläche angeordnet ist und mit dieser in einem Überlappungsbereich überlappt, und Durchführen mindestens einer zweiten interferometrischen Messung unter Gewinnung einer zweiten Gruppe von Messdaten,
(c) Abgleich der Messdaten von erster und zweiter Gruppe unter Verwendung von im Überlappungsbereich erhaltener redundanter Informationen für die Erstellung eines Gesamt-Interferogramms über den Messbereich,
**dadurch gekennzeichnet, dass** der Messbereich (CA) vollständig mit einem Film aus einer Immersionsflüssigkeit (8) belegt ist, der zwischen den Hauptflächen des Prüflings (1) und Anlegekörpern (6; 7) aus transparentem Werkstoff ausgebildet wird.

2. Verfahren nach Anspruch 1, **dadurch gekennzeichnet, dass** der Prüfling (1) mit zwei im wesentlichen planen Hauptflächen versehen ist.

3. Verfahren nach Anspruch 1 oder 2, **dadurch gekennzeichnet, dass** die Anlegekörper in Form von Anlegeplatten (6, 7) ausgebildet sind.

4. Verfahren nach Anspruch 3, **dadurch gekennzeichnet, dass** die Anlegeplatten (6; 7) Rechteckform aufweisen.

5. Verfahren nach einem der vorhergehenden Ansprüche, **dadurch gekennzeichnet, dass** für die Halterung von Prüfling (1) und Anlegekörper (6; 7) eine Halteeinrichtung (11; 12) vorgesehen ist, die mittels eines einen elektrischen Antrieb aufweisenden Transfersystems (13) in Richtungen senkrecht zum Messstrahl (4) verfahrbar ist.

6. Verfahren nach Anspruch 5, **dadurch gekennzeichnet, dass** die Halteeinrichtung (11; 12) innerhalb einer Interferometer-Kammer angeordnet und mittels des Transfersystems (13) außerhalb dieser verfahrbar ist.

7. Verfahren nach Anspruch 5 oder 6, **dadurch gekennzeichnet, dass** die Positioniergenauigkeit des Transfersystems (13) um mindestens den Faktor 5 besser ist als die räumliche Auflösung des Interferometers.

8. Verfahren nach einem der vorhergehenden Ansprüche, **dadurch gekennzeichnet, dass** die zu messende optische Eigenschaft des Prüfling-Werkstoffs die Homogenität der Brechzahl und/oder der Spannungsdoppelbrechung im Messbereich umfasst.

9. Verfahren nach einem der vorhergehenden Ansprüche, **dadurch gekennzeichnet, dass** es sich bei dem transparentem Werkstoff des Prüflings (1) und der Anlegekörper (6; 7) um dotiertes oder undotiertes Quarzglas handelt.

10. Vorrichtung zur Messung einer optischen Eigenschaft im Arbeitsbereich (CA) eines zwei sich gegenüberliegende Hauptflächen aufweisenden Prüflings (1) aus transparentem Werkstoff,
(a) mit einer Halteeinrichtung (11; 12) für den Prüfling (1),
(b) einem Interferometer, das geeignet ist, einen Messstrahl auf Teilflächen eines zu spezifizierenden Messbereichs (CA) des Prüflings (1) zu richten und Sub-Interferogramme der Teilflächen zu messen,
(c) einem Transfersystems (13), mittels dem der Prüfling (1) in Richtung senkrecht zum Messstrahl verfahrbar ist, so dass Messungen an einer Vielzahl von Teilflächen durchgeführt werden können, welche den Messbereich (CA) vollständig abdecken, wobei jede der Teilflächen von einer benachbarten Teilfläche mindestens teilweise in einem Überlappungsbereich überlappt wird; und
(d) mit einer Steuerungseinheit, die das Interferometer und das Transfersystem (13) steuert und auf Basis der Sub-Interferogramme die Form der vom Prüfling (1) transmittierten Wellenfront ermittelt, wobei die an den Überlappungsbereichen ermittelten Messdaten dazu verwendet werden, die Sub-Interferogramme untereinander anzupassen,
**dadurch gekennzeichnet,**
**dass** an den Hauptflächen des Prüflings (1) Anlegekörper (6; 7) aus transparentem Werkstoff anliegen, welche den Messbereich (CA) vollständig bedecken, wobei zwischen den Anlegekörpern (6; 7) und den Hauptflächen des Prüflings (1) über den vollständigen Messbereich (CA) ein Film aus einer Immersionsflüssigkeit (8) ausgebildet ist.

11. Vorrichtung nach Anspruch 10, **dadurch gekennzeichnet, dass** der Prüfling (1) mit zwei im wesentlichen planen Hauptflächen versehen ist.

12. Vorrichtung nach Anspruch 10 oder 11, **dadurch gekennzeichnet, dass** die Anlegekörper in Form von Anlegeplatten (6; 7) ausgebildet sind.

13. Vorrichtung nach Anspruch 12, **dadurch gekennzeichnet, dass** die Anlegeplatten (6; 7) Rechteckform aufweisen.

14. Vorrichtung nach einem der Ansprüche 10 bis 13, **dadurch gekennzeichnet, dass** die Halteeinrichtung (11; 12) für die gemeinsame Halterung von Prüfling (1) und Anlegekörper (6; 7) vorgesehen ist.

15. Vorrichtung nach Anspruch 14, **dadurch gekennzeichnet, dass** die Halteeinrichtung (11; 12) innerhalb einer Interferometer-Kammer angeordnet und mittels des Transfersystems (13) außerhalb dieser verfahrbar ist.

16. Vorrichtung nach einem der Ansprüche 10 bis 15, **dadurch gekennzeichnet, dass** die Positioniergenauigkeit des Transfersystems (13) um mindestens den Faktor 5 besser ist als die räumliche Auflösung des Interferometers.

## Claims

1. A method for the interferometric measurement of an optical characteristic of a measurement area of a specimen (1) of transparent material having two opposing main surfaces, comprising the following method steps:
(a) arranging the specimen (1) in a measurement light beam of an interferometer such that a measurement beam (4) of the interferometer passes through the main surfaces of the specimen (1) in a first surface portion of the measurement area (CA), and performing a first interferometric measurement to obtain a first group of measurement data;
(b) arranging the specimen (1) in the measurement light beam such that the measurement beam passes through the main surfaces of the specimen (1) in a second surface portion of the measurement area (CA) which is arranged offset relative to the first surface portion and overlaps therewith in an overlap region, and performing at least one second interferometric measurement to obtain a second group of measurement data;
(c) matching the measurement data of first and second group using redundant information obtained in the overlap region for preparing a total interferogram on the measurement area,
**characterized in that** the measurement area (CA) is fully covered with a film consisting of an immersion fluid (8), which is formed between the main surfaces of the specimen (1) and contact bodies (6; 7) of transparent material.

2. The method according to claim 1, **characterized in that** the specimen (1) is provided with two, substantially plane main surfaces.

3. The method according to any one of claims 1 or 2, **characterized in that** the contact bodies are shaped in the form of contact plates (6, 7).

4. The method according to claim 3, **characterized in that** the contact plates (6; 7) have a rectangular shape.

5. The method according to any one of the preceding claims, **characterized in that** a holding device (11; 12) which is movable by a transfer system (13) with an electrical drive in directions perpendicular to the measurement beam (4) is provided for holding specimen (1) and contact bodies (6; 7).

6. The method according to claim 5, **characterized in that** the holding device (11; 12) is arranged inside an interferometer chamber so as to be movable by the transfer system (13) outside said chamber.

7. The method according to claim 5 or 6, **characterized in that** the positioning accuracy of the transfer system (13) is better than the spatial resolution of the interferometer by at least the factor 5.

8. The method according to any one of the preceding claims, **characterized in that** the optical characteristic of the specimen material to be measured encompasses the homogeneity of the refractive index and/or the stress birefringence in the measurement area.

9. The method according to any one of the preceding claims, **characterized in that** the transparent material of the specimen (1) and the contact bodies (6; 7) is doped or undoped quartz glass.

10. An apparatus for measuring an optical characteristic in the measurement area (CA) of a specimen (1) of transparent material having two opposing main surfaces, said apparatus comprising
(a) a holding device (11; 12) for the specimen (1),
(b) an interferometer configured to direct a measurement beam onto surfaces portions of a measurement area (CA) of the specimen to be specified and to measure sub-interferograms of the surface portions;
(c) a transfer system (13) by which the specimen (1) is movable in a direction perpendicular to the measurement beam so that measurements can be obtained on a plurality of surface portions which fully encompass the measurement area (CA), each of the surface portions being overlapped by a neighboring surface portion at least in part in an overlap region; and
(d) a control unit which controls the interferometer and the transfer system (13) and, based on the sub-interferograms, determines the shape of the wavefront transmitted by the specimen (1), the measurement data obtained from the overlap regions being used for matching the sub-interferograms with one another,
**characterized in that** contact bodies (6; 7) of transparent material rest on the main surfaces of the specimen (1), said contact bodies fully encompassing the measurement area (CA), and wherein a film fully encompassing the measurement area (CA), and being formed from an immersion fluid (8) is between the contact bodies (6; 7) and the main surfaces of the specimen (1).

11. The apparatus according to claim 10, **characterized in that** the specimen (1) is provided with two substantially plane main surfaces.

12. The apparatus according to claim 10 or 11, **characterized in that** the contact bodies are shaped in the form of contact plates (6; 7).

13. The apparatus according to claim 12, **characterized in that** the contact plates (6; 7) have a rectangular shape.

14. The apparatus according to any one of claims 10 to 13, **characterized in that** the holding device (11; 12) is provided for jointly holding specimen (1) and contact bodies (6; 7).

15. The apparatus according to claim 14, **characterized in that** the holding device (11; 12) is arranged inside an interferometer chamber so as to be movable by the transfer system (13) outside said chamber.

16. The apparatus according to any one of claims 10 to 15, **characterized in that** the positioning accuracy of the transfer system (13) is better than the spatial resolution of the interferometer by at least the factor 5.

## Revendications

1. Procédé pour la mesure interférométrique d'une propriété optique d'une zone de mesure à mesurer d'une ébauche (1) en matériau transparent ayant deux surfaces principales opposées, comprenant les étapes de procédé suivantes :
(a) Disposition de l'ébauche (1) dans un trajet optique de mesure de l'interféromètre de telle sorte qu'un faisceau de mesure (4) de l'interféromètre traverse les surfaces principales de l'ébauche (1) dans une première surface partielle de la zone de mesure (CA) et exécution d'une première mesure interférométrique pour obtenir un premier groupe de données de mesure ;
(b) Disposition de l'ébauche (1) dans le trajet du faisceau de mesure de telle sorte que le faisceau de mesure traverse les surfaces principales de l'ébauche (1) dans une seconde surface partielle de la zone de mesure (CA) qui est décalée par rapport à la première surface partielle et qui la chevauche dans une zone de chevauchement et exécution d'au moins une seconde mesure interférométrique pour obtenir un second groupe de données de mesure,
(c) Comparaison des données mesurées du premier et du second groupe en utilisant des informations redondantes obtenues dans la zone de chevauchement pour la réalisation d'un interférogramme complet sur toute la plage de mesure,
**caractérisé en ce que** la zone de mesure (CA) est complètement recouverte d'un film d'un liquide d'immersion (8) qui est réalisé entre les surfaces principales de l'ébauche (1) et de corps de contact (6, 7) en matériau transparent.

2. Procédé selon la revendication 1, **caractérisé en ce que** l'ébauche (1) est munie de deux surfaces principales sensiblement planes.

3. Procédé selon l'une des revendications 1 ou 2, **caractérisé en ce que** les corps d'application sont réalisés sous forme de de plaques d'application (6, 7).

4. Procédé selon la revendication 3, **caractérisé en ce que** les plaques d'application (6, 7) ont une forme rectangulaire.

5. Procédé selon l'une quelconque des revendications précédentes, **caractérisé en ce que** pour la fixation de l'ébauche (1) et des corps d'application (6, 7), il est prévu un dispositif de maintien (11, 12) qui est mobile au moyen d'un système de transfert (13) présentant un entraînement électrique dans des directions perpendiculaires au faisceau de mesure (4).

6. Procédé selon la revendication 5, **caractérisé en ce que** le dispositif de maintien (11 ; 12) est disposé dans une chambre d'interféromètre et peut être sorti de cette dernière au moyen du système de transfert (13).

7. Procédé selon la revendication 5 ou 6, **caractérisé en ce que** la précision de positionnement du système de transfert (13) est d'au moins un facteur 5 meilleure que la résolution spatiale de l'interféromètre.

8. Procédé selon l'une des revendications précédentes, **caractérisé en ce que** la propriété optique mesurée du matériau de l'ébauche comprend l'homogénéité de l'indice de réfraction et/ou la biréfringence de réfraction dans la plage de mesure.

9. Procédé selon l'une des revendications précédentes, **caractérisé en ce que** le matériau transparent de l'ébauche (1) et des corps d'application (6, 7) est un verre de quartz dopé ou non dopé.

10. Dispositif pour mesurer une propriété optique dans la zone de travail (CA) d'une ébauche (1) présentant deux surfaces principales opposées en matériau transparent, comprenant
(a) un dispositif de maintien (11 ; 12) pour l'ébauche (1),
(b) un interféromètre qui est apte à diriger un faisceau de mesure sur des surfaces partielles à spécifier (CA) de l'ébauche (1) à diriger et à mesurer des sous-interférogrammes des surfaces partielles,
(c) un système de transfert (13) au moyen duquel l'ébauche (1) est mobile perpendiculairement au faisceau de mesure, de sorte que des mesures peuvent être effectuées sur une pluralité de zones partielles, qui couvrent la zone de mesure (CA) complètement, chacune des surfaces partielles étant chevauchée par une surface partielle voisine au moins partiellement dans une surface de chevauchement ; et
(d) une unité de commande qui commande l'interféromètre et le système de transfert (13) et définit sur la base des sous-interférogrammes la forme des fronts d'onde transmis par l'ébauche (1), les données de mesure relevées aux zones de chevauchement étant utilisées pour adapter les sous- interférogrammes entre eux,
**caractérisé en ce que** sur les surfaces principales de l'ébauche (1) s'appliquent des corps d'application (6, 7) en matériau transparent, qui couvrent la zone de mesure (CA) complètement, entre les corps d'application de (6, 7) et les surfaces principales de l'ébauche (1) un film constitué d'un liquide d'immersion (8) étant formé sur toute la zone de mesure (CA).

11. Dispositif selon la revendication 10, **caractérisé en ce que** l'ébauche (1) est muni de deux surfaces principales sensiblement planes.

12. Dispositif selon la revendication 10 ou 11, **caractérisé en ce que** les corps d'application sous la forme de plaques de contact (6, 7) sont formées.

13. Dispositif selon la revendication 12, **caractérisé en ce que** les plaques d'application (6 ; 7) présentent une forme rectangulaire.

14. Dispositif selon l'une des revendications 10 à 13, **caractérisé en ce que** le dispositif de maintien (11 ; 12) est prévu pour la fixation commune de l'ébauche (1) et du corps d'application (6 ; 7).

15. Dispositif selon la revendication 14 en ce que le dispositif de maintien (11 ; 12) est disposé dans une chambre d'interféromètre et peut être sorti de cette dernière au moyen du système de transfert (13).

16. Dispositif selon l'une des revendications 10 à 15, **caractérisé en ce que** la précision de positionnement du système de transfert (13) est meilleure d'au moins un facteur 5 que la résolution spatiale de l'interféromètre.
